# EUROPÄISCHE PATENTSCHRIFT

(11) **EP 2 486 542 B1**
(45) Veröffentlichungstag und Bekanntmachung des Hinweises auf die Patenterteilung: **04.07.2018**
(21) Anmeldenummer: 10767905.2
(22) Anmeldetag: 06.10.2010
(51) Int. Cl.: G06T 7/80, G06T 7/521, G06T 7/593, A61C 19/04

(54) **VERFAHREN ZUR AUFNAHME DREIDIMENSIONALER ABBILDER**
METHOD FOR ACQUIRING THREE-DIMENSIONAL IMAGES
PROCÉDÉ POUR LA PRISE DE VUE D'IMAGES TRIDIMENSIONNELLES

(30) Priorität: 07.10.2009 AT 15852009
(43) Veröffentlichungstag der Anmeldung: 15.08.2012
(73) Patentinhaber: A. TRON3D GMBH, 9020 Klagenfurt am Wörthersee (AT)
(72) Erfinder: NOWAK, Christoph, A-1100 Wien (AT); KOINIG, Horst, A-9020 Klagenfurt (AT)
(74) Vertreter: Wildhack & Jellinek
(86) Internationale Anmeldenummer: PCT/AT2010/000372
(87) Internationale Veröffentlichungsnummer: WO 2011/041812

(56) Entgegenhaltungen:
- WO-A1-2007/079805
- WO-A1-2009/089126
- SEALES W B ET AL: "Real-time depth warping for 3-D scene reconstruction", AEROSPACE CONFERENCE, 1999. PROCEEDINGS. 1999 IEEE SNOWMASS AT ASPEN, CO, USA 6-13 MARCH 1999, PISCATAWAY, NJ, USA,IEEE, US, Bd. 3, 6. März 1999 (1999-03-06), Seiten 413-419, XP010350203, ISBN: 978-0-7803-5425-8
- SCHARSTEIN D ET AL: "High-accuracy stereo depth maps using structured light", PROCEEDINGS / 2003 IEEE COMPUTER SOCIETY CONFERENCE ON COMPUTER VISION AND PATTERN RECOGNITION, 18 - 20 JUNE 2003, MADISON, WISCONSIN; [PROCEEDINGS OF THE IEEE COMPUTER CONFERENCE ON COMPUTER VISION AND PATTERN RECOGNITION], LOS ALAMITOS, CALIF. [U.A, Bd. 1, 18. Juni 2003 (2003-06-18), Seiten 195-202, XP010644898, DOI: DOI:10.1109/CVPR.2003.1211354 ISBN: 978-0-7695-1900-5
- KÜHMSTEDT, P.; BRÄUER-BURCHARDT, C.; MUNKELT, C.; HEINZE, M.; SCHMIDT, I.; HINTERSEHR, J.; NOTNI, G.: "Intraoral 3D Scanner", SPIE, PO BOX 10 BELLINGHAM WA 98227-0010 USA, September 2007 (2007-09), XP040247897, DOI: 10.1117/12.735700
- Olivier Faugeras: In: "Three-Dimensional Computer Vision", 1 January 1999 (1999-01-01), MIT Press, XP055171782, pages 189-194,

## Beschreibung

Die Erfindung betrifft ein Verfahren zur Aufnahme dreidimensionaler Abbilder von Gegenständen gemäß dem Oberbegriff des Patentanspruchs 1 sowie eine Anordnung zur Aufnahme dreidimensionaler Abbilder von Gegenständen gemäß dem Oberbegriff des Patentanspruchs 8.
Erfindungsgemäße Verfahren und Anordnungen werden insbesondere im Bereich der dreidimensionalen Aufnahme von Zähnen verwendet. Der Anwendungsbereich erstreckt sich dabei auf die Aufnahme von digitalen Zahn- und Kieferabdrücken, die Hilfestellung bei der Diagnose, die Überwachung von Zahnbehandlungen sowie die zuverlässige Kontrolle von eingesetzten Implantaten. Neben weiteren Einsatzgebieten im Bereich der Medizin- und Industrietechnik, beispielsweise im Bereich der Endoskopie, können generell Raumbereiche stereometrisch vermessen werden, die schwer zugänglich sind. Hintergrund der Erfindung ist die stereometrische Aufnahme von schwer zugänglichen Gegenständen, beispielsweise Zähnen in der Mundhöhle eines Menschen. Probleme bestehen hierbei zum einen in der erforderlichen Miniaturisierung der Aufnahmeeinheit und zum anderen in den hohen Anforderungen an die Zuverlässigkeit des Verfahrens. Insbesondere im Bereich der Zahnheilkunde sind oft Abmessungen von etwa 0,1mm relevant, sodass eine Auflösung von im Bereich von etwa 0,01mm erforderlich ist, um sämtliche Details der abzubildenden Gegenstände mit hinreichender Auflösung zu erfassen.

Aus dem Artikel "Real-Time Depth Warping for 3-D Scene Reconstruction" (SEALS, W. BRENT et Al, Proc IEE Conf. On Computer Vision and Pattern Recognition, Vol. 1, pp. 195-2012, 2003) ist eine Vorrichtung zur Aufnahme dreidimensionaler Bilder bekannt, die jeweils einen Projektor und eine Kamera umfasst. Die gemeinsame Kalibrierung der Kamera mit dem Projektor erfolgt derart, dass eine Transformation zwischen dem Kamerakoordinatensystem und dem Koordinatensystem des Projektors ermittelt wird. In einem weiteren Schritt wird eine Epipolargeometrie zwischen der Kamera und dem Projektor ermittelt. Es wird in diesem Zusammenhang eine Schar von Epipolarlinien der Kamera und eine Schar von Epipolarlinien des Projektors ermittelt, von denen jede der Epipolarlinie der Kamera jeweils eineindeutig einer Epipolarlinie des Projektors zugeordnet ist. Weiters beschreibt der Artikel "A Multibaseline Stereo System with Active Illumination and Realtime Image Acquisition "(KANG, S. B. et al. , Proc. IEE Fifth Intl. Conf. On Computer Vision, pp. 88 -93, 1995) eine Vorrichtung bestehend aus vier auf einem Träger befestigten Kameras und einem Projektor, dabei wird auf den zu beobachtenden Bildbereich ein variierendes Lichtmuster projiziert und so die Unterscheidung der einzelnen aufgenommenen Pixel verbessert.

Aus dem Stand der Technik sind bereits Zahnvermessungsvorrichtungen bekannt, die dreidimensionale Bilder liefern. Ein wesentlicher Nachteil dieser Vorrichtungen ist, dass die Sensorteile, die zu den abzubildenden Gegenständen vordringen, meist unhandlich und sperrig sind, da mitunter eine Menge unterschiedlicher Komponenten im Aufnahmebereich erforderlich ist.
Aufgabe der Erfindung ist es daher, eine Anordnung sowie ein Verfahren zur Verfügung zu stellen, die dreidimensionale Abbilder mit hoher Präzision liefern, wobei die Anordnung eine möglichst kompakte Bauform aufweist.
Die Erfindung löst diese Aufgabe bei einem Verfahren der eingangs genannten Art mit den Merkmalen des Kennzeichens des Anspruchs 1. Die Erfindung löst diese Aufgabe bei einer Anordnung der eingangs genannten Art mit den Merkmalen des Kennzeichens des Anspruchs 8.
Erfindungsgemäß ist vorgesehen, dass vorab die Anordnung der beiden Kameras kalibriert wird, wobei die Position und Orientierung der beiden Kameras zueinander festgestellt wird und eine Transformation bestimmt wird, die jeweils einer Bildposition eines mit der Kamera aufgezeichneten Bildes und einer Bildposition eines mit der anderen Kamera aufgezeichneten Bildes genau eine Raumposition in einem dreidimensionalen Aufnahmeraum zuordnet. Ferner wird im Zuge des Kalibrierungsverfahrens für jede der Kameras jeweils eine Schar von Epipolarlinien ermittelt, wobei jeweils eine Epipolarlinie der einen Kamera jeweils genau einer Epipolarlinie der anderen Kamera zugeordnet wird. Dabei ist vorgesehen, dass ein vorgegebenes Zufallsbild auf den aufzunehmenden Gegenstand projiziert wird, wobei die einzelnen Bildpunkte des Zufallsbilds einen von zumindest zwei voneinander abweichenden Farbwerten und/oder Intensitätswerten aufweisen. Dann wird für jedes Pixel der ersten Kamera jeweils eine erste Umgebung bestimmt und eine für die erste Kamera aufgefundene und das jeweilige Pixel umfassende Epipolarlinie bestimmt. Anschließend wird die dieser aufgefundenen ersten Epipolarlinie zugeordnete zweite Epipolarlinie der zweiten Kamera bestimmt. Für sämtliche Pixel des Bildes der zweiten Kamera, die sich auf der zweiten Epipolarlinie befinden, wird eine zweite Umgebung bestimmt die kongruent zur ersten Umgebung ist, es werden die Intensitätswerte der ersten und zweiten Umgebung miteinander verglichen, es wird ein Übereinstimmungsmaß für die beiden Umgebungen bestimmt und es wird diejenige Bildposition auf der zweiten Epipolarlinie bestimmt, für die das Übereinstimmungsmaß am größten ist und mit der Vergleichseinheit eine Transformation ausgehend von der Bildposition des Pixels der ersten Kamera und der ermittelten Bildposition auf der zweiten Epipolarlinie eine Raumposition bestimmbar ist, und diese Raumposition in einem Speicher abspeicherbar ist. Mit der Transformation wird ausgehend von der Bildposition des Pixels der ersten Kamera und der ermittelten Bildposition auf der zweiten Epipolarlinie eine Raumposition bestimmt und diese Raumposition abgespeichert, wobei das Abbild des aufgenommenen Gegenstands durch die Menge der aufgefundenen Raumpositionen bestimmt und für eine weitere Verarbeitung zur Verfügung gehalten wird.
Dieses Vorgehen ermöglicht eine einfache und effiziente dreidimensionale Aufnahme und Abbildung von Gegenständen und dabei wird die Zuordnung zweier denselben Pixelbereich darstellender Pixel der beiden Kameras gegenüber den bisher bekannten Verfahren erheblich vereinfacht und die erforderlichen Rechenschritte zum Auffinden zweier denselben Bildbereich abbildender Pixel erheblich beschleunigt.

Eine besondere Ausführungsform der Erfindung sieht vor, dass unmittelbar vor oder nach der Aufnahme der Menge der Raumpositionen die Projektion des Zufallsbilds inaktiv gestellt wird und gegebenenfalls eine zusätzliche Beleuchtung des Gegenstandes erfolgt, wobei mit zumindest einer Kamera ein Bild des aufzunehmenden Gegenstandes aufgezeichnet wird. Es wird jedem der ermittelten Raumpunkte der Intensitätswert oder die Bildposition zugeordnet, mittels derer basierend auf der Transformation die Raumposition des Raumpunktes ermittelt worden ist. Mit einem derartigen Vorgehen können die aufgenommenen dreidimensionalen Abbilder des Gegenstandes mit einer Farbdarstellung versehen werden und gegebenenfalls in ihrer Farbe dargestellt werden. Ferner kann vorgesehen werden, dass mittels eines Meshing-Verfahrens basierend auf der aufgezeichneten Punktmenge eine Oberflächenverlegung oder eine Raumzerlegung mit einer Anzahl von Raumelementen oder Oberflächenelementen durchgeführt wird. Dies hat den erheblichen Vorteil, dass eine dreidimensionale Darstellung der aufgenommenen Punktmenge einfach möglich ist und nachfolgende Berechnungen einfach durchgeführt werden können.
Ein besonderer Aspekt der Erfindung sieht vor, dass den Oberflächenelementen der Oberflächenzerlegung ein aus den Intensitätswerten der Raumpunkte der Punktmenge, insbesondere durch Interpolation, ermittelter Intensitätswert zugeordnet und gegebenenfalls angezeigt wird. Dies ermöglicht eine besonders realistische Farbdarstellung der aufgenommenen Gegenstände.
Ein besonders vorteilhafter Aspekt der Erfindung sieht vor, dass laufend dreidimensionale Abbildungen von Gegenständen aufgenommen werden, die Gegenstände relativ zur Anordnung zu den Kameras bewegt werden, wobei die Relativbewegung derart langsam erfolgt, dass eine Überlappung des aufgenommenen Raumbereichs zeitlich aufeinander folgender Abbildungen besteht und die ermittelten Punktmengen, Oberflächenzerlegungen oder Raumzerlegungen durch isometrische Transformation zur Deckung gebracht werden. Damit wird eine zusammengesetzte Aufnahme aus einer Vielzahl von Aufnahmen erstellt. Vorteilhaft ist dabei, dass die Aufnahmen, die üblicherweise aus sehr geringer Distanz gemacht werden, auf einfache Weise zusammengesetzt werden können und somit ein Gesamtbild aus mehreren Teilbildern erstellt werden kann, dessen Größe die Größe des Aufnahmebereichs der beiden Kameras übersteigt.
Ferner kann vorgesehen werden, dass bei mangelnder Übereinstimmung der ersten Umgebung mit den zweiten Umgebungen der Pixel auf einer Epipolarlinie des Bildes der zweiten Kamera ein die Oberfläche des aufzunehmenden Gegenstandes mattierendes Fluid auf die aufzunehmenden Gegenstände aufgesprüht wird und der Vorgang des Auffindens übereinstimmender Umgebungen nach dem Aufsprühen der Flüssigkeit fortgesetzt wird. Dies ermöglicht insbesondere bei sehr stark reflektierenden oder sehr glatten Gegenständen eine präzise dreidimensionale Aufnahme.

Ferner ist erfindungsgemäß bei einer Anordnung zur Aufnahme dreidimensionaler Abbilder von Gegenständen mit zwei Kameras mit einander überlappenden Aufnahmebereichen eine Projektionseinheit zur Abbildung eines Zufallsbilds vorgesehen, dass die einzelnen Pixel des Zufallsbilds einen von zumindest zwei voneinander abweichenden Farbwerten und/oder Intensitätswerten aufweisen, wobei mit der Projektionseinheit das Zufallsbild in die überlappenden Aufnahmebereiche der beiden Kameras projizierbar ist. Bei dieser Anordnung ist vorgesehen, dass das Zufallsbild so gewählt ist, dass die Pixel, die im Bild der beiden Kameras 1a, 1b auf der selben Epipolarlinie 9a, 9b zu liegen kommen, eindeutige Umgebungen aufweisen. Mit einer derartigen Anordnung können Bilder aufgenommen werden, die sehr leicht in ein dreidimensionales Bild umwandelbar sind.
Ein besonderer Aspekt dieser Erfindung sieht eine, vorzugsweise schaltbare Lichtquelle vor, die den überlappenden Aufnahmebereich der beiden Kameras beleuchtet. Durch die Beleuchtung mit dieser Lichtquelle können neben den zur Aufnahme der dreidimensionalen Bilder benötigten Kamerabilder auch weitere Kamerabilder erstellt werden, die entweder unmittelbar angesehen werden können oder aber zur Einfärbung eines nach der Aufnahme ermittelten dreidimensionalen Gegenstandsbildes dienen. Ferner kann die Erfindung durch einen Zerstäuber weitergebildet werden, mit dem ein mattierendes Fluid auf die aufzuzeichnenden Gegenstände aufgebracht werden kann. Dies ermöglicht die Aufnahme von mattierten Bildern, mit denen eine dreidimensionale Abbildung leichter erzielt werden kann.

Ein weiterer bevorzugter Aspekt der Erfindung sieht vor, dass den Kameras eine Kalibriereinheit nachgeschaltet ist, mittels der die Position und Orientierung der beiden Kameras zueinander feststellbar und eine Transformation bestimmbar ist, die jeweils einer Bildposition, insbesondere einem Pixel, eines mit der einen Kamera aufgezeichneten Bildes und einer Bildposition, insbesondere einem Pixel, eines mit der anderen Kamera aufgezeichneten Bildes genau eine Raumposition, insbesondere ein Voxel, in einem dreidimensionalen Aufnahmeraum zuordnet, und mittels der für jede der Kameras jeweils eine Schar von Epipolarlinien ermittelbar ist, wobei jeweils einer Epipolarlinie der einen Kamera jeweils genau eine Epipolarlinie der anderen Kamera zugeordnet ist, dass den Kameras eine Auswerteeinheit nachgeschaltet ist, mittels der für jedes Pixel der ersten Kamera eine erste Umgebung, beispielsweise von 3x3 Pixel oder 5x5 Pixel, bestimmbar ist, eine für diese erste Kamera aufgefundene und das jeweilige Pixel umfassende erste Epipolarlinie bestimmbar ist, die dieser aufgefundenen ersten Epipolarlinie zugeordnete zweite Epipolarlinie der anderen Kamera bestimmbar ist, für sämtliche Pixel des Bildes der zweiten Kamera, die sich auf der zweiten Epipolarlinie befinden, eine zweite Umgebung bestimmbar ist, die kongruent zur ersten Umgebung ist, wobei die Intensitätswerte der ersten und der zweiten Umgebung mittels einer Vergleichseinheit miteinander vergleichbar sind, mittels der Vergleichseinheit ein Übereinstimmungsmaß für die beiden Umgebungen bestimmbar ist, und diejenige Bildposition, insbesondere desjenigen Pixels, auf der zweiten Epipolarlinie bestimmbar ist, auf der das Übereinstimmungsmaß am größten ist, mittels der Transformation ausgehend von der Bildposition des Pixels der ersten Kamera und der ermittelten Bildposition auf der zweiten Epipolarlinie eine Raumposition bestimmbar ist, und diese Raumposition in einem Speicher abspeicherbar ist.
Mit einer derartigen Anordnung können auf einfache und resourcen-schonende Weise dreidimensionale Abbilder von Gegenständen aufgenommen werden.

Weiters kann vorgesehen sein, dass die optischen Achsen der beiden Kameras annähernd parallel ausgerichtet sind. Dies ermöglicht ein besonders einfaches Auffinden der Transformation und verbessert die Genauigkeit der aufgenommenen dreidimensionalen Bilder.
Ein weiterer vorteilhafter Aspekt der Erfindung sieht vor, dass die beiden Kameras und die Projektionseinheit auf dem selben Träger oder Instrument angeordnet sind. Dies ermöglicht eine einfache Handhabung, insbesondere an platzbegrenzten Orten. Vorteilhafte Ausgestaltungen und Weiterbildungen der Erfindung sind in den Unteransprüchen erläutert.
Die Erfindung wird beispielhaft anhand der folgenden Abbildungen beschrieben.
Fig. 1 zeigt ein Instrument in der Form und den Abmessungen eines Mundspiegels mit zwei Kameras und einer Projektionseinheit in Vorderansicht.
Fig. 2 zeigt das Instrument mit zwei Kameras und einer Projektionseinheit in Seitenansicht.
Fig. 3 zeigt Bilder der beiden Kameras mit einander zugeordneten Epipolarlinien.
Fig. 4 zeigt eine erste Epipolarlinie, eine zweite Epipolarlinie sowie auf diesen Epipolarlinien liegende Punkte mit deren Umgebungen.
Fig. 5 zeigt eine diskrete Darstellung des Übereinstimmungsmaßes sowie eine Interpolation des Übereinstimmungsmaßes auf einer der zweiten Epipolarlinien.
Fig. 6 zeigt eine Aufnahme eines Gebisses als zusammengesetzte Aufnahme aus mehreren Einzelaufnahmen.
Fig. 7 zeigt die Wirkung einer kalibrierten Transformationsfunktion bei zwei gegebenen Bildpositionen auf den mit den beiden Kameras erzeugten Bildern.
Fig. 8 zeigt ein Zufallsbild.

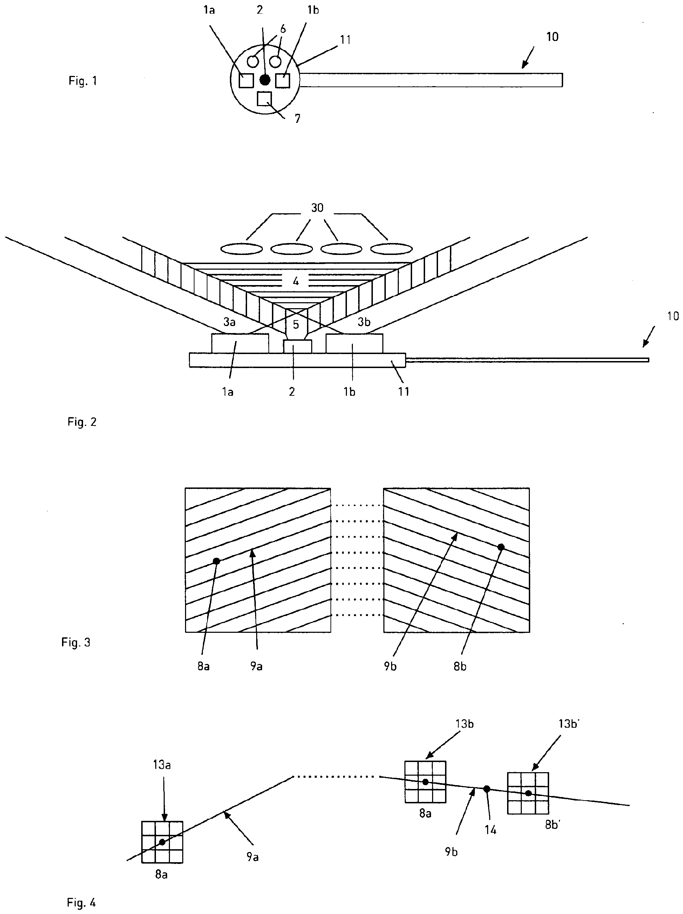

Fig. 1 zeigt beispielhaft den grundsätzlichen Aufbau einer erfindungsgemäßen Anordnung mit einem Instrument 10 in Form und den Abmessungen eines Mundspiegels. Diese Anordnung umfasst ein Instrument 10, auf dessen Endteil 11 zwei Kameras 1a, 1b und eine Projektionseinheit 2 angeordnet sind. Alternative Ausführungsformen können Endoskope, chirurgische Werkzeuge oder generell Werkzeugträger umfassen, die zu den aufzuzeichnenden unzugänglichen Gegenständen 30, beispielsweise Zähnen, vordringen können und auf denen zwei Kameras 1a, 1b und eine im Folgenden noch beschriebene Projektionseinheit 2 angeordnet werden können.
Diese beiden Kameras 1a, 1b weisen Bildbereiche 3a, 3b auf, die teilweise überlappen. Die Aufnahmebereiche der beiden Kameras 1a, 1b sind gleich groß gewählt, wobei je nach typischem vorgegebenem Abstand der aufzunehmenden Gegenstände 30 von den Kameras 1a, 1b die Aufnahmebereiche derart gewählt werden, dass ein möglichst großer Teil der Gegenstände 30 im Überlappungsbereich 4 der Aufnahmebereiche 3a, 3b beider Kameras 1a, 1b liegt.
Im Bereich zwischen den beiden Kameras 1a, 1b ist eine Projektionseinheit 2 angeordnet, die ein Zufallsbild 40 in zumindest einen Teilbereich des Überlappungsbereichs 4 der beiden Kameras 1a, 1b wirft. Insbesondere ist es vorteilhaft, wenn das Zufallsbild 40 auf den gesamten Überlappungsbereich 4 der beiden Bildbereiche 3a, 3b der beiden Kameras 1a, 1b projiziert wird. In dem in Fig. 2 dargestellten Beispiel wird das Zufallsbild 40 mit der Projektionseinheit 2 in einen Projektionsbereich 5 projiziert, der den Überlappungsbereich 4 der beiden Bildbereiche 3a, 3b der beiden Kameras 1a, 1b einschließt.

Vor der Aufnahme der Gegenstände wird für die Anordnung der beiden Kameras 1a, 1b eine Kalibrierung vorgenommen. Für die Kalibrierung der beiden Kameras 1a, 1b ist die Projektionseinheit 2 nicht erforderlich und kann während des gesamten Kalibrierungsvorgangs ausgeschaltet bleiben. Bei der Kalibrierung wird zunächst die gegenseitige Position und Orientierung der beiden Kameras 1a, 1b zueinander bestimmt. Ein solches Vorgehen kann auf unterschiedliche Art realisiert werden, eine vorteilhafte Möglichkeit ist in J. Heikkilä: Geometric camera calibration using circular control points, IEEE Transcations on Pattern Analysis and Machine Intelligence 22(10), 1066-1077, 2000 oder Faugeras, Toscani: Camera calibration for 3D computer vision, Proc. Int'l Workshop on Industrial Applications of Machine Vision and Machine Intelligence, Tokyo, Japan, pp. 240-247, Feb. 1987 beschrieben. Als Resultat wird eine Transformation erhalten, die einem Bildpunkt 8a eines Bildes der ersten Kamera 1a und einem Bildpunkt 8b eines Bildes der zweiten Kamera 1b einen Raumpunkt 17 im überlappenden Aufnahmebereich der beiden Kameras 1a, 1b zuordnet.
Jedem Pixel ist umkehrbar eindeutig ein Bildpunkt 8a, 8b zugeordnet. Bildpunkte können jedoch auch zwischen den einzelnen Pixeln liegen, was das im Folgenden beschriebene Verfahren für die Verwendung von Subpixel-Arithmetik geeignet macht. Selbstverständlich kann eine derartige Zuordnung nicht für beliebige Bildpunkte 8a, 8b erfolgen, sondern es kann lediglich ein Raumpunkt 17 für jene Bildpunkte 8a, 8b ermittelt werden, die auf einander zugeordneten Epipolarlinien 9a, 9b liegen. Aus diesem Grund ist es im Zuge der Kalibrierung erforderlich, Scharen von Epipolarlinien 9a, 9b, dargestellt in Fig. 3, der beiden Kameras 1a, 1b aufzufinden und jede der Epipolarlinien 9a der einen Kamera 1a umkehrbar eindeutig jeweils einer Epipolarlinie 9b der jeweils anderen Kamera 1b zuzuordnen. Das Auffinden und die gegenseitige Zuordnung der Epipolarlinien 9a, 9b ist dem Fachmann bekannt und kann beispielsweise aus Zhengyou Zhang: Determining the Epipolar Geometry and its Uncertainty: A Review, International Journal of Computer Vision, volume 27 pages 161-195, 1996 entnommen werden.
Wie bereits erwähnt, wird im Zuge des erfindungsgemäßen Verfahrens ein Zufallsbild 40 auf den Überlappungsbereich 4 der Kameras 1a, 1b projiziert. Das Zufallsbild ist beispielsweise ein Digitalbild mit einer vorgegebenen Höhe und Breite und einer Anzahl von rechteckigen rasterförmig angeordneten Pixeln bzw. Bildbereichen. Diese Pixel weisen einen aus einer Anzahl von vorgegebenen Farb- und/oder Intensitätswerten auf. Hintergrund der Verwendung eines Zufallsbild 40 ist, dass für das im Folgenden beschriebene Verfahren die Umgebung jedes Pixels, beispielsweise eine 3x3 oder 5x5-Umgebung, innerhalb des gesamten Zufallbilds dem jeweiligen Pixel eindeutig zuordenbar sein soll. Aufgrund der Eindeutigkeit der Umgebung kann ein Raumpunkt an unterschiedlichen Stellen in zwei mit jeweils einer der beiden Kameras 1a, 1b aufgenommenen Digitalbildern aufgefunden werden. Werden pro Pixel zwei voneinander abweichende Helligkeitswerte, beispielsweise weiß und schwarz, als mögliche Zufallswerte vorgegeben, stehen bei Verwendung einer Umgebung von 5x5 Pixeln etwa 32 Millionen unterschiedlicher Umgebungen zur Verfügung, sodass ohne weitere Einschränkungen des Verfahrens Bilder mit bis zu 32 Millionen Pixeln aufgenommen werden können und jedem aufgenommenen Pixel eine eindeutige Umgebung zugeordnet werden kann.
Das Zufallsbild kann bereits mit sehr einfachen Mitteln hergestellt werden und liegt beispielsweise als Dia vor. Die Berechnung der einzelnen den Pixeln zugeordneten Zufallswerte kann dabei mittels eines bereits bekannten Algorithmus, beispielsweise eines Mersenne Twister - Algorithmus erfolgen, der hinlänglich bekannt ist und in M. Matsumoto and T. Nishimura: Mersenne twister: A 623-dimensionally equidistributed uniform pseudorandom number generator. ACM Trans. on Modeling and Computer Simulations, 1998. beschrieben ist.
Alternativ kann zur Platzoptimierung eine Ausgestaltung der Projektionseinheit 2 mit einem Beugungsgitter vorgenommen werden, wobei wesentlich geringere Abmessungen des die Information des Digitalbilds tragenden Beugungsgitters möglich sind als bei der Verwendung von Dias. Die Ausgestaltung von Beugungsgittern zur Darstellung von Digitalbildern ist dem Fachmann hinlänglich bekannt und z. B. in JR Leger, MG Moharam, and TK Gaylord: Diffractive Optics - An Introduction to the Feature Issue. Applied Optics, 1995, 34 (14) p. 2399-2400 beschrieben. Im Bereich des Dias oder des Beugungsgitters befindet sich eine Lichtquelle, beispielsweise eine Laserdiode, deren Licht durch das Dia oder das Beugungsgitter auf die Gegenstände 30 projiziert wird.
Um ein dreidimensionales Bild des Gegenstands 30 zu erhalten, werden die im folgenden beschriebenen Verfahrensschritte für jedes einzelne der Pixel 8a der aufgenommenen Bilder einer der beiden Kameras, im Folgenden die erste Kamera 1a genannt, durchgeführt. Diese mit der ersten Kamera 1a aufgenommenen Pixel 8a werden im Folgenden erste Pixel 8a genannt. Gegebenenfalls kann die Anzahl dieser Pixel 8a um diejenigen Pixel reduziert werden, deren jeweiliger Aufnahmebereich nicht vom Aufnahmebereich der anderen Kamera, im Folgenden zweite Kamera 1b genannt, umfasst ist. Die mit der zweiten Kamera 1b aufgenommenen Pixel 8b werden im Folgenden zweite Pixel 8b genannt.
Zunächst wird für jedes der ersten Pixel 8a eine erste Umgebung 13a bestimmt. Dies kann beispielsweise eine Umgebung mit einer Größe von 5x5 Pixeln sein, wobei sich das jeweilige Pixel 8a bevorzugterweise an der zentralen Stelle der ersten Umgebung 13a befindet.

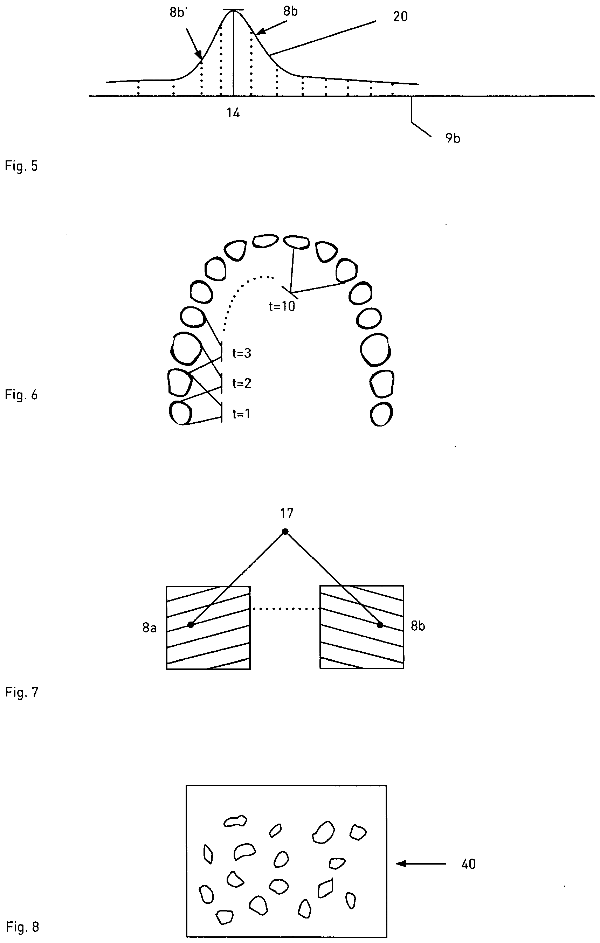

Für jedes der ersten Pixel 8a der ersten Kamera 1a wird die Epipolarlinie 9a, wie in Fig. 4 dargestellt, der ersten Kamera 1a sowie die dieser zugeordnete Epipolarlinie 9b der zweiten Kamera 1b herangezogen. Wie bereits erwähnt, sind diese Epipolarlinien 9a, 9b bereits im Zuge der Kalibrierung der Kameras 1a, 1b ermittelt worden. Anschließend wird für die zweiten Pixel 8b auf dem Bild der zweiten Kamera 1b, die auf der Epipolarlinie 9b liegen, eine zweite Umgebung 13b von 5x5 Pixeln ermittelt und mit der ersten Umgebung 13a verglichen. Im Zuge des Vergleichs wird ein Übereinstimmungsmaß ermittelt, das angibt, ob eine Übereinstimmung der Intensitätswerte der beiden Umgebungen 13a, 13b besteht.
Stimmen die beiden Umgebungen 13a, 13b in Bezug auf die ihnen zugeordneten Intensitätswerte überein, liefert das Übereinstimmungsmaß - abhängig von seiner Formulierung - den größten oder den kleinsten Wert, insbesondere - bei tolaler Übereinstimmung - null. Beispielsweise kann als Übereinstimmungsmaß für zwei Umgebungen der euklidische Abstand verwendet werden, wobei pixelweise sämtliche Intensitätswerte der Umgebung miteinander verglichen werden. Weitere Methoden zur Bildung eines Übereinstimmungsmaßes können aus Reinhard Klette, Andreas Koschan, Karsten Schlüns: Computer Vision - Räumliche Information aus digitalen Bildern, 1.Auflage (1996), Friedr. Vieweg & Sohn Verlag entnommen werden.
Das Übereinstimmungsmaß wird für die jeweiligen Umgebungen 13a, 13b von zwei Pixeln gebildet, von denen das eine im Bild der ersten Kamera 1a liegt und das andere auf derjenigen zweiten Epipolarlinie 9b liegt, die der ersten Epipolarlinie 9a zugeordnet ist, auf der das erste Pixel 8a im Bild der ersten Kamera 1a liegt. Da auf jeder zweiten Epipolarlinie 9b typischerweise 100 bis 1000 Pixel liegen, wird jeweils das Übereinstimmungsmaß für sämtliche auf der zweiten Epipolarlinie 9b gelegenen Punkte gebildet. Diese Übereinstimmungsmaße werden gemeinsam mit der Bildposition des jeweiligen Pixels in eine diskret definierte Funktion eingetragen, deren Definitionsbereich mittels einer Interpolationsfunktion 20 auf die gesamte zweite Epipolarlinie 9b ausgedehnt wird. Diese diskret definierte Funktion der Übereinstimmungsmaße und eine zugehörige interpolierende Funktion 20 sind in Fig. 5 dargestellt. Von dieser interpolierenden Funktion 20 wird das Maximum gesucht und diejenige Bildposition 14, an der das Maximum aufgefunden worden ist, wird als die dem Pixel 8a aus dem Bild der ersten Kamera entsprechende Bildposition angesehen. Es wird davon ausgegangen, dass auf diese Bildposition 14 sowie die Bildposition des Pixels 8a aus dem Bild der ersten Kamera 1a aufgrund der sehr ähnlichen Umgebungen sowie der Eindeutigkeit der Umgebung im Bildbereich derselbe Gegenstandsbereich abgebildet ist.

Die Suche der denselben Gegenstandsbereich abbildenden Bildposition des Bildes der zweiten Kamera 1b für ein Pixel des Bildes der ersten Kamera 1a wird somit auf die zweiten Epipolarlinien 9b beschränkt. Daher kann von dem sehr strengen Kriterium der Eindeutigkeit der Umgebung für das gesamte Zufallsbild abgegangen werden und es muss lediglich die Eindeutigkeit der Umgebung für die Pixel gefordert werden, die im Bild der beiden Kameras 1a, 1b auf derselben Epipolarlinie 9a, 9b zu liegen kommen. Aufgrund dieser Erweiterung des Bereichs der zulässigen Zufallsbild muss für die meisten Fälle lediglich eine 3x3-Umgebung ermittelt werden. Zur Erhöhung der Zuverlässigkeit bzw. zur Erhöhung der Präzision kann die numerisch aufwendigere 5x5-Umgebung herangezogen werden.

Die beiden ermittelten Bildpositionen werden der im Zuge der Kalibrierung Transformation unterworfen, die eine Raumposition 17 liefert. Diese Raumposition 17 entspricht der Position im Raum, die im Zuge der Aufnahme auf beide ermittelte Bildpositionen in den Bildern der beiden Kameras abgebildet worden ist.

Wird diese Vorgehensweise für eine Anzahl der Bildpunkte 8a eines Bildes der ersten Kamera 1a angewendet, erhält man eine ebenso große Anzahl von Bildpositionen 14 im gleichzeitig aufgenommenen Bild der zweiten Kamera sowie eine ebenso große Anzahl von Raumpunkten 17, die auf der Oberfläche des aufgenommenen Gegenstands 30 liegen.

Eine Erweiterung der erfindungsgemäßen Anordnung ist in Fig. 1 dargestellt, wobei diese zusätzlich über eine schaltbare Lichtquelle 6 verfügt, welche die abzubildenden Gegenstände 30 im Überlappungsbereich 4 der Aufnahmebereiche 3a, 3b der beiden Kameras beleuchtet. Diese Lichtquelle 6 kann so kurz wie realisierbar vor dem Einschalten der Projektionseinheit 2 eingeschaltet werden. Anschließend wird mit einer oder beiden Kameras 1a, 1b jeweils ein Bild erstellt und die Intensitätswerte für einen oder mehrere Farbkanäle aufgenommen. Danach wird die Lichtquelle 6 ausgeschaltet und die Projektionseinheit 2 eingeschaltet und das oben beschriebene Verfahren zur Ermittlung der Raumpositionen 17 durchgeführt. Es wird davon ausgegangen, dass die Position der Anordnung zwischen der Aufnahme des Bildes mit dem Licht der Lichtquelle 6 und der anschließenden Aufnahme der Raumpositionen 17 unverändert bleibt. Nachdem die Bildpositionen 14 und die zugehörigen Raumpunkte 17 bestimmt sind, kann jedem Raumpunkt 17 der Intensitätswert des ihn über die Transformation festlegenden Pixel 8a und/oder des zugehörigen zweiten Pixels 8b auf der zweiten Epipolarlinie 9b zugewiesen werden.

Eine weitere zusätzliche Verbesserung der erfindungsgemäßen Vorgehensweise wird dadurch erzielt, dass nach der Ermittlung der Punkte ein Meshing-Schritt auf die ermittelte Punktwolke der erzielten Raumpunkte 17 angewendet wird. Dabei werden die ermittelten Raumpunkte 17 als Punkte der Oberfläche eines dreidimensionalen Gegenstands angesehen, der durch Tetraeder dargestellt wird. Gegebenenfalls kann die Darstellung auch mit anderen Typen von Elementen wie Prismen oder Würfeln erfolgen oder es kann auch nur die Oberfläche durch Dreiecke oder Vierecke dargestellt werden. Eine umfassende Darstellung von Meshing-Algorithmen kann beispielsweise in Joe, Simpson: Triangular Meshes for Regions of Complicated Shape, International Journal for Numerical Methods in Engineering, Wiley, Vol 23, pp.751-778, 1986 oder Borouchaki, Lo: Fast Delaunay triangulation in three dimensions, Computer methods in applied mechanics and engineering, Elsevier, Vol 128, pp.153-167, 1995 gefunden werden.
Sind zuvor bereits den einzelnen Raumpunkten 17 Intensitätswerte zugewiesen worden, können die Intensitätswerte durch Interpolation auf die Elemente der Oberfläche übertragen werden, wodurch eine durchgängige Farbgebung der Oberfläche erzielt wird.

Die in den Figuren dargestellte Anordnung fertigt etwa zehn bis zwanzig Abbilder des abzubildenden Gegenstands 30 pro Sekunde an. Wird die Anordnung, wie in Fig. 6. dargestellt, gegenüber den abzubildenden Gegenständen, hier Zähnen, derart langsam bewegt, dass in zwei aufeinanderfolgenden Zeitschritten überlappende Gegenstandsbereiche aufgenommen werden, besteht die Möglichkeit, die überlappenden Bildbereiche durch eine isometrische Transformation derart ineinander überzuführen, dass diese im selben Raumbereich zu liegen kommen. Derartige Verfahren sind beispielsweise in Timothee Jost, Heinz Hügli: Fast ICP algorithms for shape registration, Proceedings of the 24th DAGM Symposium on Pattern Recognition, pp. 91 - 99, 2002 beschrieben. Durch die Aufnahme mehrerer Bilder zu unterschiedlichen Zeitpunkten kann ein größeres dreidimensionales Abbild aus mehreren kleineren Abbildern zusammengesetzt werden. Durch dieses Vorgehen kann die gesamte in Fig. 6 dargestellte Zahnreihe dreidimensional abgebildet werden. Während des Aufnahmeprozesses wird das jeweils aktuell aufgenommene dreidimensionale Gesamtabbild auf einem Bildschirm dargestellt. Der Messvorgang wird dahingehend zusätzlich unterstützt, dass während der Messung gleichzeitig die optimale Ausrichtung (virtueller Horizont) und die aktuelle Ausrichtung des Messkopfes anhand des jeweiligen dreidimensionalen Abbilds dargestellt werden.

Die im Folgenden beschriebene Verbesserung der erfindungsgemäßen Anordnung führt zu einer Verbesserung des Kontrasts der mit den Kameras aufgenommenen Bilder. Weist die Oberfläche der aufzunehmenden Gegenstände eine sehr hohe Reflexivität auf, werden die Bilder mitunter nicht richtig dargestellt bzw. befinden sich einige unbeabsichtigte Reflexionen auf den Bildern, welche die Qualität der Aufnahme erheblich beeinträchtigen können. Aus diesem Grund kann eine mattierende Flüssigkeit, beispielsweise Alginat, auf die Zähne aufgesprüht werden, welche die Aufnahme von dreidimensionalen Bildern mit der beschriebenen Vorgehensweise erheblich erleichtert. Aus diesem Grund weist die Anordnung einen Zerstäuber 7 auf, mit dem ein mattierendes Fluid auf die aufzuzeichnenden Gegenstände aufgebracht werden kann.

Der Handgriff des die Anordnung tragenden Instruments 10 weist an seiner Rückseite ein Kabel auf, mittels dessen die Anordnung mit einer Verarbeitungseinheit verbunden ist. Diese Verarbeitungseinheit versorgt die Kameras 1a, 1b, die Projektionseinheit 2, die Lichtquelle 6 mit der Versorgungsspannung und empfängt die ermittelten Daten von den Kameras 1a, 1b. Weiters kann die Flüssigkeit über eine Flüssigkeitsleitung durch den Handgriff des Instruments 10 zum Zerstäuber 7 geführt sein.

Als Alternative kann zur Übermittlung der Daten an die Verarbeitungseinheit eine WLAN-Schnittstelle verwendet werden. Diese bietet den Vorteil, dass keine Kabelführungen erforderlich sind. In dieser Ausführungsform verfügt das Instrument 10 über eine Batterie zur Spannungsversorgung der Kameras, der Projektionseinheit und der Lichtquelle sowie einen Tank für die mattierende Flüssigkeit.

Vorteilhafterweise kann vorgesehen sein, dass das Zufallsbild 40 so gewählt ist, dass die Pixel, die im Bild der beiden Kameras 1a, 1b auf derselben Epipolarlinie 9a, 9b zu liegen kommen, eindeutige Umgebungen 13a, 13b aufweisen.
Ein solches Zufallsbild 40 unterscheidet sich von einem an sich bekannten "structured light pattern" dadurch, dass die Umgebungen 13a, 13b der einzelnen Pixel voneinander unterschiedlich sind und insbesonders auf einer Epipolarlinie 9a, 9b einzigartig sind. Structured light patterns weisen eine Vielzahl von Pixeln auf, die jeweils identische Umgebungen 13a, 13b aufweisen. Im Gegensatz zu den structured light patterns kann ein Erkennungsverfahren dadurch eine gleichzeitige Erkennung von gleichen Raumpunkten in den aufgenommenen Kamerabildern mit einem einzigen Bildaufnahmeschritt vorgenommen werden. Dies ist insbesondere vorteilhaft, da hierdurch die bei mehreren hintereinander durchgeführten Aufnahmen mit mehreren structured light patterns auftretenden Bewegungsartefakte vermieden werden können. Somit wird eine schnellere und einfachere Detektion von dreidimensionalen Bildern möglich.

## Patentansprüche

1. Verfahren zur Aufnahme dreidimensionaler Abbilder von Gegenständen mit zwei Kameras (1a, 1b) mit einander überschneidenden Aufnahmebereichen,
wobei vorab die Anordnung der beiden Kameras (1a, 1b) kalibriert wird, wobei die Position und Orientierung der beiden Kameras (1a, 1b) zueinander festgestellt wird und eine Transformation bestimmt wird, die jeweils einer Bildposition (8a), insbesondere die Position eines Pixels, eines mit der einen Kamera (1a) aufgezeichneten Bildes und einer Bildposition (8b), eines mit der anderen Kamera (1b) aufgezeichneten Bildes genau eine Raumposition (17), in einem dreidimensionalen Aufnahmeraum zuordnet,
und ferner im Zuge des Kalibrierverfahrens für jede der Kameras (1a, 1b) jeweils eine Schar von Epipolarlinien (9a, 9b) ermittelt wird, wobei jeweils eine Epipolarlinie (9a) der einen Kamera (1a) jeweils genau einer Epipolarlinie (9b) der anderen Kamera (1b) zugeordnet wird,
wobei
ein vorgegebenes Zufallsbild (40) auf den aufzunehmenden Gegenstand (30) projiziert wird, wobei die einzelnen Bildpunkte des Zufallsbilds (40) einen von zumindest zwei voneinander abweichenden Farbwerten und/oder Intensitätswerten aufweisen, und die Umgebung jedes Pixels innerhalb des gesamten Zufallbilds dem jeweiligen Pixel eindeutig zuordenbar ist,
und anschließend für jedes Pixel der ersten Kamera (1a)
- eine erste Umgebung (13a) bestimmt wird,
- eine für diese erste Kamera (1a) aufgefundene und das jeweilige Pixel (8a) umfassende erste Epipolarlinie (9a) bestimmt wird,
- die dieser aufgefundenen ersten Epipolarlinie (9a) zugeordnete zweite Epipolarlinie (9b) der zweiten Kamera (1b) bestimmt wird,
- für sämtliche Pixel (8b) des Bildes der zweiten Kamera (1b), die sich auf der zweiten Epipolarlinie (9b) befinden,
- eine zweite Umgebung (13b) bestimmt wird, die kongruent zur ersten Umgebung (13a) ist,
- die Intensitätswerte der ersten und der zweiten Umgebung (13a, 13b) miteinander verglichen werden,
- ein Übereinstimmungsmaß für die beiden Umgebungen bestimmt wird, und
- diejenige Bildposition (14) auf der zweiten Epipolarlinie (9b) bestimmt wird, für die das Übereinstimmungsmaß am größten ist, und
- wobei mittels der Transformation ausgehend von der Bildposition des Pixels (8a) der ersten Kamera (1a) und der ermittelten Bildposition (14) auf der zweiten Epipolarlinie (8b) eine Raumposition (17) bestimmt wird, und diese Raumposition (17) abgespeichert wird, wobei das Abbild des aufgenommenen Gegenstands (30) durch die Menge der aufgefundenen Raumpositionen (17) bestimmt wird und für eine weitere Verarbeitung zur Verfügung gehalten wird.

2. Verfahren gemäß Anspruch 1, **dadurch gekennzeichnet, dass** unmittelbar vor oder nach der Aufnahme der Menge der Raumpositionen (17) die Projektion des Zufallsbilds inaktiv gestellt wird, und gegebenenfalls eine zusätzliche Beleuchtung der aufzunehmenden Gegenstände (30) erfolgt, wobei mit zumindest einer Kamera (1a, 1b) ein Bild des aufzunehmenden Gegenstands (30) aufgezeichnet wird,
wobei jedem der ermittelten Raumpunkte (17) der, gegebenenfalls interpolierte, Intensitätswert oder die, gegebenenfalls interpolierten, Intensitätswerte derjenigen Bildposition (14), insbesondere die Bildposition eines Pixels (8a, 8b), zugeordnet werden, mittels derer basierend auf der Transformation die Raumposition des Raumpunkts (17) ermittelt worden ist.

3. Verfahren gemäß Anspruch 1 oder 2, **dadurch gekennzeichnet, dass** mittels eines Meshing-Verfahrens basierend auf der aufgezeichneten Punktmenge eine Oberflächenzerlegung oder einer Raumzerlegung mit einer Anzahl von Raumelementen oder Oberflächenelementen durchgeführt wird.

4. Verfahren gemäß den Ansprüchen 2 und 3, **dadurch gekennzeichnet, dass** den Oberflächenelementen der Oberflächenzerlegung ein aus den Intensitätswerten der Raumpunkte der Punktmenge, insbesondere durch Interpolation, ermittelter Intensitätsverlauf zugeordnet und gegebenenfalls angezeigt wird.

5. Verfahren gemäß einem der vorangehenden Ansprüche, **dadurch gekennzeichnet, dass** laufend dreidimensionale Abbildungen von Gegenständen (30) aufgenommen werden,
die Gegenstände relativ zur Anordnung der Kameras (1a, 1b) bewegt werden, wobei die Relativbewegung derart langsam erfolgt, dass eine Überlappung des aufgenommenen Raumbereichs zweier zeitlich aufeinanderfolgender Abbildungen besteht, und
die ermittelten Punktmengen, Oberflächenzerlegungen oder Raumzerlegungen durch isometrische Transformation zur Deckung gebracht werden, und damit eine zusammengesetzte Aufnahme aus einer Vielzahl von Aufnahmen erstellt wird.

6. Verfahren gemäß einem der vorangehenden Ansprüche, **dadurch gekennzeichnet, dass** bei mangelnder Übereinstimmung der ersten Umgebung (13a) mit einer zweiten Umgebung (13b) eines zweiten Pixels (8b) auf einer Epipolarlinie (9b) des Bilds der zweiten Kamera (1b) ein die Oberfläche des aufzunehmenden Gegenstands (30) mattierendes Fluid auf die aufzunehmenden Gegenstände aufgesprüht wird und der Vorgang des Auffindens übereinstimmender Umgebungen nach dem Aufsprühen der Flüssigkeit fortgesetzt wird.

7. Verfahren nach einem der vorangehenden Ansprüche, **dadurch gekennzeichnet, dass** das Zufallsbild (40) so gewählt ist, dass die Pixel, die im Bild der beiden Kameras (1a, 1b) auf derselben Epipolarlinie (9a, 9b) zu liegen kommen, eindeutige Umgebungen (13a, 13b) aufweisen.

8. Anordnung zur Aufnahme dreidimensionaler Abbilder von Gegenständen mit zwei Kameras (1a, 1b) mit einander überlappenden Aufnahmebereichen
umfassend eine Projektionseinheit (2) zur Abbildung eines Zufallsbilds (40), wobei die einzelnen Pixel des Zufallsbilds (40) einen von zumindest zwei voneinander abweichenden Farbwerten und/oder Intensitätswerten aufweisen und die Umgebung jedes Pixels innerhalb des gesamten Zufallbilds dem jeweiligen Pixel eindeutig zuordenbar ist, und
wobei mit der Projektionseinheit (2) das Zufallsbild (40) in die überlappenden Aufnahmebereiche beider Kameras (1a, 1b) projizierbar ist,
**dadurch gekennzeichnet, dass**
a) den Kameras (1a, 1b) eine Kalibriereinheit nachgeschaltet ist, mittels der
- die Position und Orientierung der beiden Kameras (1a, 1b) zueinander und eine Transformation bestimmbar ist, die jeweils einer Bildposition, eines mit der einen Kamera (1a) aufgezeichneten Bildes und einer Bildposition eines mit der anderen Kamera (1b) aufgezeichneten Bildes genau eine Raumposition in einem dreidimensionalen Aufnahmeraum zuordnet, und
- mittels der für jede der Kameras (1a, 1b) jeweils eine Schar von Epipolarlinien (9a, 9b) ermittelbar ist, wobei jeweils einer Epipolarlinie (9a) der einen Kamera (1a) jeweils genau eine Epipolarlinie (9b) der anderen Kamera (1b) zugeordnet ist,
b) den Kameras eine Auswerteeinheit nachgeschaltet ist, mittels der für jedes Pixel eines mittels der ersten Kamera (1a) aufgenommenen Bilds
- eine erste Umgebung (13a) bestimmbar ist,
- eine für diese erste Kamera (1a) aufgefundene und das jeweilige Pixel (1a) der ersten Kamera umfassende erste Epipolarlinie (9a) bestimmbar ist,
- die dieser aufgefundenen ersten Epipolarlinie (9a) zugeordnete zweite Epipolarlinie (9b) der anderen Kamera (1b) bestimmbar ist,
- für sämtliche Pixel des Bildes der zweiten Kamera (1b), die sich auf der zweiten Epipolarlinie (9b) befinden,
- eine zweite Umgebung (13b) bestimmbar ist, die kongruent zur ersten Umgebung (13a) ist, und
c) eine Vergleichseinheit vorgesehen ist, mit der die Intensitätswerte der ersten und der zweiten Umgebung (13a, 13b) miteinander vergleichbar sind, wobei
- mit der Vergleichseinheit ein Übereinstimmungsmaß für die beiden Umgebungen bestimmbar ist, und diejenige Bildposition, insbesondere eines Pixels, auf der zweiten Epipolarlinie (9b) bestimmbar ist, für die das Übereinstimmungsmaß am größten ist, und
- mit der Vergleichseinheit eine Transformation ausgehend von der Bildposition des Pixels (8a) der ersten Kamera (1a) und der ermittelten Bildposition (14) auf der zweiten Epipolarlinie (9b) eine Raumposition (17) bestimmbar ist, und diese Raumposition (17) in einem Speicher abspeicherbar ist.

9. Anordnung gemäß Anspruch 8, **gekennzeichnet durch** eine, vorzugsweise schaltbare, Lichtquelle (6), die den überlappenden Aufnahmebereich der beiden Kameras beleuchtet.

10. Anordnung gemäß Anspruch 8 oder 9, **gekennzeichnet durch** einen Zerstäuber (7), zum Aufbringen eines mattierendesn Fluids auf die aufzuzeichnenden Gegenstände.

11. Anordnung gemäß einem der Ansprüche 8 bis 10, **dadurch gekennzeichnet, dass** die optischen Achsen der beiden Kameras (1a, 1b) annähernd parallel ausgerichtet sind.

12. Anordnung gemäß einem der Ansprüche 8 bis 11, **dadurch gekennzeichnet, dass** die beiden Kameras (1a, 1b) und die Projektionseinheit (2) auf demselben Träger oder Instrument (10) angeordnet sind.

13. Anordnung nach einem der vorangehenden Ansprüche 8 bis 12, **dadurch gekennzeichnet, dass** das Zufallsbild (40) so gewählt ist, dass die Pixel, die im Bild der beiden Kameras (1a, 1b) auf derselben Epipolarlinie (9a, 9b) zu liegen kommen, eindeutige Umgebungen (13a, 13b) aufweisen.

## Claims

1. A method for acquiring three-dimensional images of objects using two cameras (1a, 1b) having acquisition areas that overlap each other
wherein, in advance, the arrangement of the two cameras (1a, 1b) is calibrated, wherein the position and orientation of the two cameras (1a, 1b) with respect to each other is ascertained and a transformation is determined, which respectively assigns an image position (8a), in particular the position of a pixel, of an image recorded with the one camera (1a) and one image position (8b) of an image recorded with the other camera (1b), exactly one spatial position (17) in a three-dimensional acquisition space,
and further, in the course of the calibration method for each of the cameras (1a, 1b), a group of epipolar lines (9a, 9b) is identified, wherein an epipolar line (9a) of the one camera (1a) is assigned in each case to exactly one epipolar line (9b) of the other camera (1b),
wherein
a specified random image (40) is projected on the object (30) to be acquired, wherein the individual image points of the random image (40) have one of at least two different colour values and/or intensity values, and the environment of each pixel inside the entire random image is uniquely assignable to the respective pixel,
and then, for each pixel of the first camera (1a)
- a first environment (13a) is determined,
- a first epipolar line (9a) found for this first camera (1a) and comprising the respective pixel (8a) is determined,
- the second epipolar line (9b) of the second camera (1b) assigned to this found first epipolar line (9a) is determined,
- for all pixels (8b) of the image of the second camera (1b), which are located on the second epipolar line (9b),
- a second environment (13b) is determined, which is congruent with the first environment (13a),
- the intensity values of the first and second environment (13a, 13b) are compared with each other,
- a measure of agreement of the two environments is determined, and
- the image position (14) on the second epipolar line (9b) for which the measure of agreement is greatest is determined, and
- wherein, a spatial position (17) is determined by means of the transformation based on the image position of the pixel (8a) of the first camera (1a) and the identified image position (14) on the second epipolar line (8b), and this spatial position (17) is stored, wherein the image of the acquired object (30) is determined by the set of found spatial positions (17) and is kept available for further processing.

2. The method according to Claim 1, **characterised in that** immediately before or after the acquisition of the set of spatial positions (17), the projection of the random image is made inactive and, where appropriate, an additional illumination of the object (30) to be acquired takes place, wherein the at least one camera (1a, 1b) records an image of the object (30) to be recorded,
wherein the, possibly interpolated, intensity value or the, possibly interpolated, intensity values of that respective image position (14), in particular the image position of a pixel (8a, 8b), are assigned to each of the determined spatial points (17), by means of which, based on the transformation, the spatial position of the spatial point (17) is determined.

3. The method according to Claim 1 or 2, **characterised in that** by means of a meshing method based on the recorded set of points, a surface partition or a space partition is carried out with a number of space elements or surface elements.

4. The method according to Claims 2 and 3, **characterised in that** an intensity profile determined from the intensity values of the spatial points of the points set, in particular by interpolation, is assigned to the surface elements of the surface partition and optionally displayed.

5. The method according to any one of the preceding claims, **characterised in that** three-dimensional images of objects (30) are continuously acquired,
the objects are moved relative to the arrangement of the cameras (1a, 1b), wherein the relative movement takes place so slowly that there is an overlapping of the acquired spatial region of two temporally successive images, and
the determined set of points, surface partitions or space partitions are brought into congruence by an isometric transformation, and thus
a composite acquisition is created from a plurality of acquisitions.

6. The method according to any one of the preceding claims, **characterised in that** in the case of a lack of agreement of the first environment (13a) with the second environment (13b) of a second pixel (8b) on an epipolar line (9b) of the image of the second camera (1b), a fluid that matts the surface of the object (30) to be acquired is sprayed onto the objects to be acquired and the procedure of finding agreeing environments continues after the liquid has been sprayed on.

7. The method according to any one of the preceding claims, **characterised in** the random image (40) is selected such that the pixels, which lie on the same epipolar line (9a, 9b) in the image of the two cameras (1a, 1b), comprise unique environments (13a, 13b).

8. An arrangement for acquiring three-dimensional images of objects using two cameras (1a, 1b) having acquisition areas that overlap each other,
comprising a projection unit (2) for reproducing a random image (40), wherein the individual pixels of the random image (40) have one of at least two different colour values and/or intensity values, and the environment of each pixel inside the entire random image is uniquely assignable to the respective pixel, and
wherein, by means of the projection unit (2), the random image (40) can be projected into the overlapping acquisition areas of the two cameras (1a, 1b),
**characterised in that**
a) a calibration unit is connected in series with the cameras (1a, 1b), by means of which
- the position and orientation of the two cameras (1a, 1b) with respect to one another and a transformation can be determined, which respectively assigns an image position, of an image recorded with the one camera (1a) and an image position of an image recorded with the other camera (1b), exactly one spatial position in a three-dimensional acquisition space, and
- by means of which, for each of the cameras (1a, 1b), a group of epipolar lines (9a, 9b) can be determined, wherein an epipolar line (9a) of the one camera (1a) is respectively assigned exactly one epipolar line (9b) of the other camera (1b),
b) an evaluation unit is connected in series with the cameras, by means of which for each pixel of an image acquired by means of the first camera (1a)
- a first environment (13a) can be determined,
- a first epipolar line (9a) found for this first camera (1a) and comprising the respective pixel (1a) of the first camera can be determined,
- the second epipolar line (9b) of the other camera (1b) assigned to this found first epipolar line (9a) can be determined,
- for all pixels of the image of the second camera (1b), which are located on the second epipolar line (9b),
- a second environment (13b) can be determined, which is congruent with the first environment (13a), and
c) a comparison unit is provided, with which the intensity values of the first and second environment (13a, 13b) can be compared with one another, wherein
- by means of the comparison unit, a measure of agreement for the two environments can be determined, and the image position, in particular of a pixel, on the second epipolar line (9b) for which the measure of agreement is greatest can be determined, and
- by means of the comparison unit, a spatial position (17) can be determined by means of the transformation based on the image position of the pixel (8a) of the first camera (1a) and the determined image position (14) on the second epipolar line (9b), and this spatial position (17) can be stored in a memory.

9. The arrangement according to Claim 8, **characterised by** a, preferably switchable, light source (6), which illuminates the overlapping acquisition area of the two cameras.

10. The arrangement according to Claim 8 or 9, **characterised by** an atomiser (7), for applying a matting fluid on the object to be recorded.

11. The arrangement according to one of Claims 8 to 10, **characterised in that** the optical axes of the two cameras (1a, 1b) are aligned almost in parallel.

12. The arrangement according to one of Claims 8 to 11, **characterised in that** the two cameras (1a, 1b) and the projection unit (2) are arranged on the same carrier or instrument (10).

13. The arrangement according to any one of preceding claims 8 to 12, **characterised in that** the random image (40) is selected so that the pixels which lie on the same epipolar line (9a, 9b) in the image of the two cameras (1a, 1b), comprise unique environments (13a, 13b).

## Revendications

1. Procédé pour la prise de vue d'images tridimensionnelles d'objets au moyen de deux caméras (1a, 1b) ayant des zones de prise de vue se croisant,
dans lequel l'agencement des deux caméras (1a, 1b) est étalonné au préalable, dans lequel la position et l'orientation des deux caméras (1a, 1b) sont identifiées l'une par rapport à l'autre et une transformation est déterminée, qui attribue respectivement à une position d'image (8a), en particulier la position d'un pixel, d'une image capturée par une caméra (1a) et à une position d'image (8b), d'une image capturée avec l'autre caméra (1b), précisément une position spatiale (17) dans un espace de prise de vue tridimensionnel
et, en outre, dans le cadre du procédé d'étalonnage, une série de courbes épipolaires (9a, 9b) est déterminée pour chacune des caméras (1a, 1b), dans lequel respectivement à une courbe épipolaire (9a) d'une caméra (1a) est attribuée précisément une courbe épipolaire (9b) de l'autre caméra (1b),
dans lequel
une image aléatoire (40) prédéterminée est projetée sur l'objet à capturer (30), dans lequel les pixels individuels de l'image aléatoire (40) présentent une valeur parmi au moins deux valeurs de couleur et/ou valeurs d'intensité différentes l'une de l'autre et l'environnement de chaque pixel au sein de la totalité de l'image aléatoire peut être attribué au pixel respectif de manière univoque.
et, ensuite, pour chaque pixel de la première caméra (1a)
- un premier environnement (13a) est déterminé,
- une première courbe épipolaire (9a) trouvée pour cette première caméra (1a) et comprenant le pixel respectif (8a) est déterminée,
- la deuxième courbe épipolaire (9b) de la deuxième caméra (1b) attribuée à cette première courbe épipolaire (9a) trouvée est déterminée,
- pour la totalité des pixels (8b) de l'image de la deuxième caméra (1b), qui se trouvent sur la deuxième courbe épipolaire (9b),
- un deuxième environnement (13b) est déterminé, qui concorde avec le premier environnement (13a),
- les valeurs d'intensité du premier et du deuxième environnement (13a, 13b) sont comparées l'une à l'autre,
- une mesure de concordance est déterminée pour les deux environnements et
- la position d'image (14) sur la deuxième courbe épipolaire (9b), pour laquelle la mesure de concordance est la plus élevée, est déterminée et
- dans lequel, au moyen de la transformation, une position dans l'espace (17) est déterminée à partir de la position d'image du pixel (8a) de la première caméra (1a) et de la position d'image déterminée (14) sur la deuxième courbe épipolaire (8b) et cette position dans l'espace (17) est mémorisée, dans lequel la représentation de l'objet capturé (30) est déterminée par la quantité de positions dans l'espace (17) trouvées et est conservée à disposition pour traitement ultérieur.

2. Procédé selon la revendication 1, **caractérisé en ce que**, directement avant ou après la prise de vue de la quantité de positions dans l'espace (17), la projection de l'image aléatoire est définie comme inactive et, le cas échéant, un éclairage supplémentaire est effectué sur l'objet à capturer (30), dans lequel une image de l'objet à capturer (30) est prise avec au moins une caméra (1a, 1b),
dans lequel à chacun des points dans l'espace (17) déterminés, est/sont attribuée(s) la valeur d'intensité, le cas échéant interpolée, ou les valeurs d'intensité, le cas échéant interpolées, de la position d'image respective (14), notamment de la position d'image d'un pixel (8a, 8b), au moyen desquelles, sur la base de la transformation, la position dans l'espace du point dans l'espace (17) a été déterminée.

3. Procédé selon la revendication 1 ou 2, **caractérisé en ce que**, au moyen d'un procédé de maillage, sur la base de la quantité de points capturés, une décomposition de surface ou une décomposition d'espace est réalisée avec un certain nombre d'éléments d'espace ou d'éléments de surface.

4. Procédé selon les revendications 2 et 3, **caractérisé en ce que**, aux éléments de surface de la décomposition de surface, est attribuée une courbe d'intensité déterminée à partir des valeurs d'intensité des points d'espace de la quantité de point, notamment par interpolation, puis celle-ci est le cas échéant affichée.

5. Procédé selon une des revendications précédentes, **caractérisé en ce que** des images tridimensionnelles d'objets (30) sont capturées en continu,
les objets sont déplacés par rapport à l'agencement des caméras (1a, 1b), dans lequel le mouvement relatif s'effectue lentement de sorte qu'un chevauchement de la zone spatiale capturée de deux images successives dans le temps soit produit et
les quantités de points déterminées, les décompositions de surface ou décompositions d'espace sont mises en coïncidence par transformation isométrique et, ainsi,
une prise de vue recomposée est créée à partir d'une pluralité de prises de vue.

6. Procédé selon une des revendications précédentes, **caractérisé en ce que**, en cas d'absence de concordance du premier environnement (13a) avec un deuxième environnement (13b) d'un deuxième pixel (8b) sur une courbe épipolaire (9b) de l'image de la deuxième caméra (1b), un fluide matifiant la surface de l'objet à capturer (30) est atomisé sur l'objet à capturer et le processus de recherche d'environnements concordants est poursuivi après atomisation du fluide.

7. Procédé selon une des revendications précédentes, **caractérisé en ce que** l'image aléatoire (40) est choisie de sorte que les pixels, qui se trouvent dans l'image des deux caméras (1a, 1b) sur la même courbe épipolaire (9a, 9b), présentent des environnements univoques (13a, 13b).

8. Agencement pour la prise de vue d'images tridimensionnelles d'objets au moyen de deux caméras (1a, 1b) ayant des zones de prise de vue se chevauchant
comprenant une unité de projection (2) pour la formation d'une image aléatoire (40), dans lequel les pixels individuels de l'image aléatoire (40) présentent une valeur parmi au moins deux valeurs de couleur et/ou valeurs d'intensité différentes l'une de l'autre et l'environnement de chaque pixel au sein de la totalité de l'image aléatoire peut être attribué au pixel respectif de manière univoque et
dans lequel l'image aléatoire (40) peut être projetée par l'unité de projection (2) dans les zones de prise de vue se chevauchant des deux caméras (1a, 1b),
**caractérisé en ce**
a) **qu'**une unité d'étalonnage est disposée en aval des caméras (1a, 1b), au moyen de laquelle
- la position et l'orientation des deux caméras (1a, 1b) peut être déterminée l'une par rapport à l'autre et une transformation peut être déterminée, qui attribue respectivement à une position d'image d'une image capturée par la caméra (1a) et à une position d'image d'une image capturée par l'autre caméra (1b), précisément une position dans l'espace dans un espace de prise de vue tridimensionnel et
- au moyen de laquelle une série de courbes épipolaires (9a, 9b) peut être déterminée pour chacune des caméras (1a, 1b), dans lequel respectivement à une courbe épipolaire (9a) d'une caméra (1a) est attribuée précisément une courbe épipolaire (9b) de l'autre caméra (1b),
b) une unité de traitement est disposée en aval des caméras, au moyen de laquelle pour chaque pixel d'une image capturée au moyen de la première caméra (1a),
- un premier environnement (13a) peut être déterminé,
- une première courbe épipolaire (9a) trouvée pour cette première caméra (1a) et comprenant le pixel respectif (1a) de la première caméra peut être déterminée,
- la deuxième courbe épipolaire (9b) de l'autre caméra (1b) attribuée à cette première courbe épipolaire (9a) trouvée peut être déterminée,
- pour la totalité des pixels de l'image de la deuxième caméra (1b), qui se trouvent sur la deuxième courbe épipolaire (9b),
- un deuxième environnement (13b) peut être déterminé, qui concorde avec le premier environnement (13a) et
c) une unité de comparaison est prévue, avec laquelle les valeurs d'intensité du premier et du deuxième environnement (13a, 13b) sont comparées les unes aux autres, dans lequel
- avec l'unité de comparaison, une mesure de concordance pour les deux environnements peut être déterminée et la position d'image, notamment d'un pixel, pour laquelle la mesure de concordance est la plus élevée, peut être déterminée sur la deuxième courbe épipolaire (9b) et
- avec l'unité de comparaison, avec une transformation, à partir de la position d'image du pixel (8a) de la première caméra (1a) et de la position d'image déterminée (14) une position dans l'espace (17) peut être déterminée sur la deuxième courbe épipolaire (9b) et cette position dans l'espace (17) peut être mémorisée dans une mémoire.

9. Agencement selon la revendication 8, **caractérisé par** une source de lumière (6), de préférence commutable, qui éclaire la zone de prise de vue se chevauchant des deux caméras.

10. Agencement selon la revendication 8 ou 9, **caractérisé par** un atomiser (7), pour appliquer un fluide matifiant sur les objets à capturer.

11. Agencement selon une des revendications 8 à 10, **caractérisé en ce que** les axes optiques des deux caméras (1a, 1b) sont dirigés de manière presque parallèle.

12. Agencement selon une des revendications 8 à 11, **caractérisé en ce que** les deux caméras (1a, 1b) et l'unité de projection (2) sont disposées sur le même support ou instrument (10).

13. Agencement selon une des revendications précédentes 8 à 12, **caractérisé en ce que** l'image aléatoire (40) est choisie de sorte que les pixels, qui se trouvent dans l'image des deux caméras (1a, 1b) sur la même courbe épipolaire (9a, 9b), présentent des environnements univoques (13a, 13b).
